# FASCICULE DE BREVET EUROPEEN

(11) **EP 3 922 148 B1**
(45) Date de publication et mention de la délivrance du brevet: **19.03.2025**
(21) Numéro de dépôt: 21189162.7
(22) Date de dépôt: 11.12.2013
(51) Int. Cl.: A47J 31/54

(54) **CHAUDIÈRE POUR MACHINE DE PRÉPARATION DE BOISSON**
HEIZKESSEL FÜR GETRÄNKEZUBEREITUNGSMASCHINE
BOILER FOR BEVERAGE PREPARATION MACHINE

(30) Priorité: 12.12.2012 FR 1261968
(43) Date de publication de la demande: 15.12.2021
(62) Demande divisionnaire de: 13817667.2
(73) Titulaire: Compagnie Méditerranéenne des Cafés, 06510 Carros (FR)
(72) Inventeur: BLANC, Jean-Pierre, 06510 CARROS (FR)
(74) Mandataire: Hautier IP

(56) Documents cités:
- EP-A2- 2 213 957
- WO-A2-2009/043851
- DE-A1- 102007 034 370
- FR-A1- 2 855 359
- US-A- 2 835 782

## Description

La présente invention concerne une chaudière pour machine de préparation de boissons chaudes capable de chauffer un fluide porté à une pression relativement élevée. Elle trouvera notamment son application pour les chaudières de machines à café.

De manière connue des chaudières pour machine de préparation de boissons chaudes comportent un bloc de métal définissant une chambre de chauffage et à l'intérieur duquel est noyé un élément résistif. Ces chaudières ont pour inconvénient de présenter une grande inertie thermique et nécessitent un temps relativement long pour chauffer le liquide. Par ailleurs, l'obtention de ces chaudières induit un coût de matière important.

Afin d'obtenir une boisson chaude en un temps réduit, il a été proposé des chaudières capables d'élever rapidement la température d'un liquide servant à la préparation d'une boisson. Ces chaudières comportent habituellement un élément chauffant de type résistance sérigraphiée associée à un ou plusieurs diffuseurs.

Ces chaudières sont cependant rarement utilisées pour la préparation de boissons nécessitant une mise sous pression substantielle du liquide. En effet, la chaudières ne résistent pas à des pressions relativement importantes supérieures à environ 8 bars tout en conservant un encombrement et un coût limités. Or, la préparation de certaines boissons telles que le café expresso requiert de porter le liquide à une pression d'environ 16 bars en vue de l'extraction du café. Ces solutions sont donc utilisées dans des machines de préparation de café infusé sans pression ou sous une faible pression. Ces machines ne permettent pas la préparation de café expresso.

D'autres solutions ont été développées pour permettre un chauffage très rapide du liquide tout en résistant à des pressions suffisantes pour préparer un café expresso. Cette solution est par exemple décrite dans le document publié sous le numéro FR 2.932.972. Cette solution consiste à prévoir dans la chaudière des moyens de reprise d'efforts agencés pour coopérer avec un corps et avec des moyens d'appui de la chaudière afin d'absorber les efforts générés par la mise sous pression du fluide et tendant à écarter le corps des moyens d'appui.

Une autre amélioration significative est décrite dans le document publié sous le numéro WO 2010/121998. Cette amélioration consiste à prévoir dans la chaudière une chambre de déformation configurée de sorte que sous l'effet de la pression régnant dans la chambre de chauffage, un diffuseur se déforme élastiquement dans la chambre de déformation pour absorber en partie au moins l'effort de pression.

Une autre solution est décrite dans le document WO2009/043851.

Une autre solution est décrite dans le document EP 2 213 957.

Bien que performantes, ces solutions ont pour inconvénient de présenter un coût de revient relativement élevé. Ce coût est en partie dû à la fabrication et à l'assemblage des différentes pièces de la chaudière pour résister à la pression élevée.

Ainsi, il existe un besoin consistant à proposer une chaudière pour machine de préparation de boissons chaudes qui permette de chauffer rapidement un liquide porté à une pression élevée et qui présente une complexité et/ou un coût de revient limité.

La présente invention vise à satisfaire ce besoin.

A cet effet, l'invention prévoit une chaudière pour machine de préparation de boisson destinée à chauffer un fluide sous une pression pour réaliser une infusion d'un produit par le liquide chauffé comprenant:
- un corps présentant une paroi externe recouverte d'une résistance sérigraphiée et une paroi interne formant une partie au moins d'une chambre de chauffage,
- la paroi interne du corps présentant une paroi longitudinale s'étendant selon une direction longitudinale et présentant une section circulaire selon un plan perpendiculaire à la direction longitudinale,
- un élément interne présentant une face externe située au regard de la paroi longitudinale du corps pour définir avec la paroi longitudinale une partie au moins d'une chambre de chauffage,
- une entrée et une sortie de liquide dans la chambre de chauffage,
et dans laquelle :
- la paroi interne du corps présente également au moins une paroi de fond située à une extrémité distale de la paroi longitudinale,
- un support configuré pour coopérer avec le corps de manière à former avec la paroi longitudinale et la paroi de fond une enceinte étanche,
- la paroi de fond étant concave.

L'invention propose ainsi une chaudière pour machine de préparation de boisson apte à résister à des pressions élevées tout en étant simple, fiable et robuste.

En particulier, la pression régnant dans la chambre de chauffage est appliquée en partie sur la paroi longitudinale dont la section est circulaire ce qui permet d'éviter des concentrations de pression. En outre, cette pression est appliquée sur la paroi de fond qui forme avec la paroi longitudinale une seule pièce, de préférence monolithique. L'enceinte à l'intérieur de laquelle le liquide est mis sous pression est donc délimitée par deux pièces uniquement : le support et le corps. Les contraintes d'étanchéité dues à la pression sont donc réduites.

En outre, et de manière particulièrement avantageuse, l'enceinte ne présente qu'une seule interface d'étanchéité. Cette unique interface d'étanchéité est l'interface entre la paroi longitudinale et le support.

Les moyens nécessaires à l'étanchéité et à la tenue en pression sont donc essentiellement concentrés sur cette interface. La structure de la chaudière est ainsi considérablement simplifiée. Le nombre de pièces la constituant, et par voie de conséquence les risques de défaillances et son coût sont significativement réduits.

Avant d'entamer une revue détaillée de modes de réalisation de l'invention, sont énoncées ci-après des caractéristiques optionnelles qui peuvent éventuellement être utilisées en association ou alternativement :
- Avantageusement, le corps fait office de diffuseur.
- Avantageusement, le corps forme une surface continue à l'exception de l'ouverture destinée à être fermée par le support et éventuellement à l'exception d'un orifice d'entrée et/ou d'un orifice de sortie. Ainsi, le corps ne présente pas d'ouverture traversante.
- Avantageusement, ladite portion de la paroi longitudinale du corps est cylindrique. Alternativement elle est tronconique de section circulaire.
- Selon un mode de réalisation, la paroi longitudinale présente une extrémité proximale opposée à l'extrémité distale et formant une ouverture.
- De préférence, le support présente une face intérieure et la coopération de la face intérieure avec le corps ferme cette ouverture.
- De préférence, la face intérieure du support est concave. Alternativement elle est plane.
- Avantageusement, la paroi de fond présente avec la paroi longitudinale une continuité de matière. De préférence, la paroi interne du corps, formée par la paroi de fond et la paroi longitudinale, est monolithique. La paroi de fond ne présente pas d'ouverture en particulier pas d'ouverture pour l'entrée ou la sortie du liquide. Cela permet de définir un corps dont la résistance aux pressions régnant à l'intérieur de l'enceinte est élevée tout en autorisant une réduction de l'épaisseur des parois du corps.
- Avantageusement, la paroi interne est formée dans un matériau conducteur thermiquement. De préférence, la paroi interne est formée dans un métal conducteur tel que l'aluminium ou l'acier.
- De préférence, le corps est monolithique et est formé de métal.
- Avantageusement, il n'y a pas d'arêtes entre la paroi de fond et la portion cylindrique.
- De préférence, l'élément interne s'étend principalement selon la direction longitudinale.
- Avantageusement, l'élément interne est cylindrique.
- Avantageusement, l'élément interne est creux pour former intérieurement un canal de circulation. La chaudière est configurée pour permettre au liquide de traverser le canal de circulation formé par l'élément interne. De préférence l'élément interne présente une ouverture débouchant dans la chambre de chauffage. De préférence, l'élément interne forme un tube cylindrique. Il permet de mieux contrôler le cheminement du liquide à l'intérieur de la chaudière et donc de mieux contrôle l'élévation de température de ce dernier tout en conservant un encombrement réduit.

Cela permet de simplifier la réalisation et l'assemblage de la machine. Le conduit débouche dans le canal de circulation, à l'intérieur de l'élément creux ou à une embouchure de ce dernier. Cela permet de mieux contrôler le cheminement du liquide et l'élévation de température de ce dernier.
- Selon un mode de réalisation, le corps comporte une entrée reliant la chambre de chauffage à un port destiné à être connecté à un organe de la machine ou un tuyau. Cela permet également de simplifier la réalisation et l'assemblage de la machine.
- Selon un mode de réalisation, la paroi longitudinale et la paroi de fond forment une même pièce.
- Avantageusement, le support comporte au moins une entrée ou une sortie débouchant dans l'enceinte. Cela permet que l'enceinte ne présente qu'une ouverture au niveau de son contact avec le support et permet par conséquent d'avoir une enceinte très résistante aux pressions élevées.
- Avantageusement, le support comporte au moins : un port destiné à être connecté à un organe de la machine ou un tuyau, et un conduit reliant fluidique ment le port de communication avec l'intérieur de l'enceinte.
- Avantageusement, le support comporte au moins une entrée et une sortie débouchant dans l'enceinte.
- Avantageusement, le support comporte au moins : une entrée, un port d'entrée et un conduit reliant le port d'entrée à l'entrée ; une sortie, un port de sortie et un conduit reliant le port de sortie à la sortie. Avantageusement, l'une parmi l'entrée ou la sortie débouche dans la chambre de chauffage et l'autre parmi l'entrée ou la sortie débouche dans le canal de circulation. Ainsi, la connexion de la chaudière au circuit fluidique de la machine ne requiert que de connecter le support. Avant ou après ces connexions, le support est solidarisé de manière étanche sur le corps pour finaliser la formation de l'enceinte étanche.
- Avantageusement, la chaudière comprend un guide configuré pour définir avec une face externe de l'élément interne et la paroi longitudinale un chemin de passage pour le liquide dans la chambre de chauffage.
- De préférence, le guide présente une forme d'hélice et le chemin de passage définit une hélicoïde.
- Selon un mode de réalisation préféré, le guide forme une pièce distincte du support et du corps.

Selon un autre mode de réalisation, l'invention porte sur une chaudière pour machine de préparation de boisson apte à chauffer un liquide pressurisé pour réaliser une infusion d'un produit par le liquide chauffé comprenant:
- un corps présentant une paroi externe recouverte d'une résistance sérigraphiée et une paroi interne formant une partie au moins d'une chambre de chauffage,
   ∘ la paroi interne du corps présentant au moins une paroi longitudinale s'étendant selon une direction longitudinale et présentant une section circulaire selon un plan perpendiculaire à la direction longitudinale,
- un élément interne présentant une face externe configurée pour être placée au regard de la paroi interne du corps afin de définir avec la paroi interne du corps une partie au moins d'une chambre de chauffage,
- un support configuré pour coopérer avec le corps de manière à former une enceinte étanche,
- une entrée et une sortie de liquide dans la chambre de chauffage,
- la chaudière étant configurée pour que le déplacement du liquide dans la chambre de chauffage selon la direction longitudinale s'effectue dans un premier sens,
et dans laquelle :
- l'élément interne est creux pour former un canal dont une première extrémité débouche dans la chambre de chauffage et dont une deuxième extrémité communique avec un conduit d'entrée ou de sortie porté par le support,
- la chaudière étant configurée de manière à ce que le déplacement du liquide dans le canal selon la direction longitudinale s'effectue dans un deuxième sens opposé au premier.

Ainsi, l'entrée et la sortie sont disposées à la même extrémité de l'enceinte.

L'invention a également pour objet une machine de préparation de boissons telle qu'une machine à cafés comprenant par une chaudière selon l'une quelconque des caractéristiques précédentes. Cette machine comprend une pompe destinée à élever la pression du liquide avant son introduction dans la chaudière. De préférence mais de manière optionnelle, la machine comprend également une chambre d'infusion fluidiquement connectée à la chaudière.

Selon un autre mode de réalisation, l'invention porte sur un procédé d'assemblage d'une chaudière selon l'invention, le procédé comprenant : l'insertion de l'élément interne dans le corps en rapportant le support sur le corps. De manière optionnelle, l'insertion de l'élément interne dans le corps comprend le vissage du support par rapport au corps. De manière optionnelle, préalablement à l'insertion de l'élément interne dans le corps, on insère un guide dans le corps ou sur l'élément interne.

Selon un autre mode de réalisation, l'invention porte sur un procédé d'assemblage d'une chaudière comprenant les étapes suivantes : on insère un guide dans le corps ou sur l'élément interne ; on insère l'élément interne dans le corps.

D'autres caractéristiques, buts et avantages de la présente invention apparaîtront à la lecture de la description détaillée qui va suivre, et en regard des dessins annexés donnés à titre d'exemples non limitatifs et sur lesquels:
La figure 1 est un schéma en coupe longitudinale d'un exemple de mode de réalisation de l'invention.
La figure 2 est une vue en coupe transversale du mode de réalisation illustré en figure 1.
La figure 3 est un schéma en coupe longitudinale d'un autre mode de réalisation de l'invention.
La figure 4 est un schéma en coupe longitudinale d'un autre mode de réalisation de l'invention.

Les dessins sont donnés à titre d'exemples et ne sont pas limitatifs de l'invention. Ils constituent des représentations schématiques de principe destinées à faciliter la compréhension de l'invention et ne sont pas nécessairement à l'échelle des applications pratiques. En particulier les épaisseurs relatives des différentes pièces et les sections des différents canaux ne sont pas représentatives de la réalité.

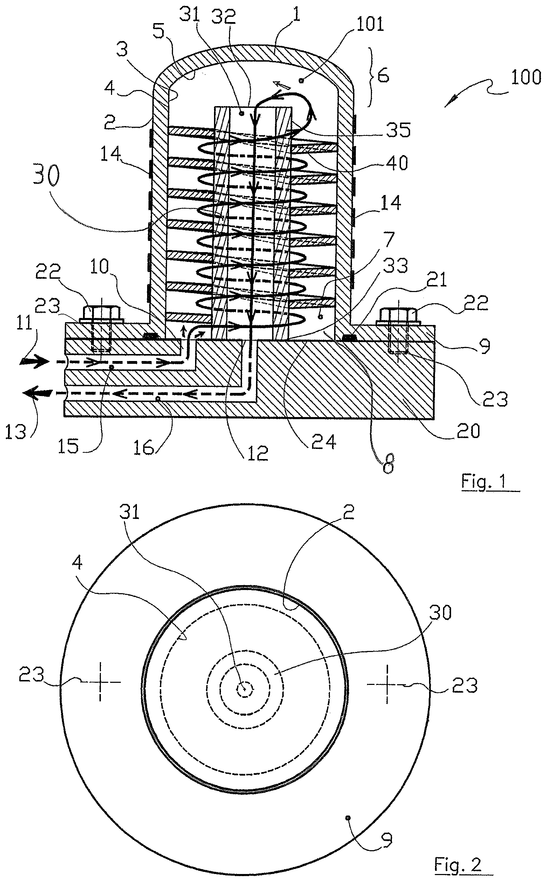

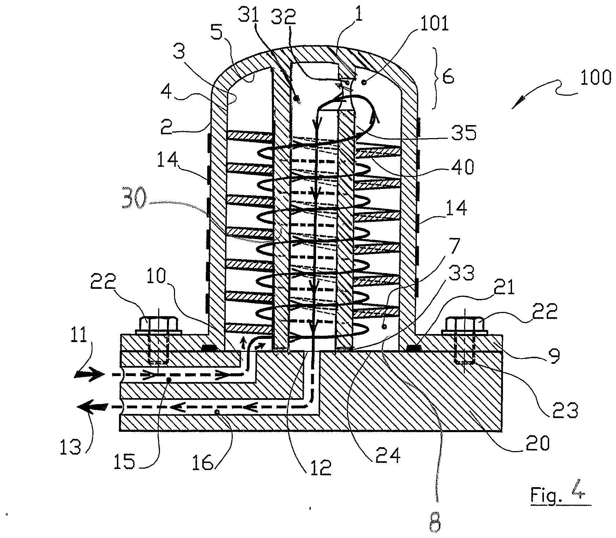

Un mode de réalisation va maintenant être détaillé en références aux figures 1 et 4.

La chaudière 100 comporte un corps 1 et un support 20. Le corps 1 et le support 20 sont configurés pour coopérer de manière à former une enceinte 101 fermée. Le corps 1 présente une paroi externe 2 et une paroi interne 3 destinée à être disposé au contact du liquide à chauffer. La paroi interne 3 est associée à un ou plusieurs éléments chauffants.

Avantageusement, cet élément chauffant est un film résistif présentant une haute densité de puissance. Il est par exemple obtenu par sérigraphie ou photogravure à partir d'une encre résistive. Il peut être de type film épais, habituellement désigné par l'expression "Thick Film" ou encore être de type circuit imprimé. Cet élément chauffant convient pour les chaudières de type FTH (Flow Through Heater) qui présentent pour particularité que leur élément chauffant transmet de la chaleur presque directement au fluide et au fur et à mesure que celui se déplace dans un canal de circulation. Pour des raisons de clarté, on ne fera référence dans la suite de la description qu'aux résistances sérigraphiées. Dans chacun des modes de réalisation décrits par la suite, la résistance sérigraphiée pourra être substituée par une résistance photogravée ou par tout autre film résistif à haute densité de puissance.

La résistance sérigraphiée 14 comporte au moins une piste formant un motif sur la paroi externe 2. La résistance sérigraphiée 14 comprend une piste sérigraphiée ou une pluralité de pistes définissant le motif. Ce motif peut par exemple former un serpentin, une spirale, un ensemble de cercles concentriques ou juxtaposés ou encore toutes autres formes.

De préférence, la ou les résistances sérigraphiées 14 s'étendent sur tout ou au moins les trois quarts de la longueur de la paroi longitudinale.

Lorsque la résistance sérigraphiée est alimentée en électricité, elle produit de la chaleur qui se transmet à la paroi externe 2 puis par conduction à la paroi interne 3, puis au liquide occupant la chambre de chauffage 102 et qui est au contact de la paroi interne 3. De manière préférée la chambre de chauffage forme un canal de circulation et la chaudière objet de la présente invention est de type « Flow Through Heater » dont la définition a été donnée ci-dessus.

La résistance sérigraphiée peut par exemple présenter une puissance thermique comprise entre 1300 watts et 2500 watts, et plus particulièrement de l'ordre de 1800 à 2200 watts. La paroi du corps 1 a pour fonction de servir de substrat pour recevoir la résistance sérigraphiée et pour assurer une bonne diffusivité thermique entre la résistance sérigraphiée et le liquide. Avantageusement la paroi interne 3 est revêtue d'un revêtement alimentaire.

La paroi interne 3 présente une portion présentant une section circulaire et s'étendant principalement selon une direction longitudinale 17. Cette portion de paroi interne 3 est désignée paroi longitudinale 4. La paroi longitudinale 4 présente de préférence une forme cylindrique comme illustré sur les figures 1 à 4. Avantageusement, la paroi externe au niveau de la paroi longitudinale 4, présente également une forme cylindrique. Alternativement, la paroi longitudinale 3 présente une forme tronconique de section circulaire.
cylindrique. Alternativement, la paroi longitudinale 3 présente une forme tronconique de section circulaire.

La paroi interne 3 se prolonge jusqu'à une extrémité distale 6 par une paroi de fond 5. La paroi de fond 5 et la paroi longitudinale 4 forment une étanchéité parfaite. De préférence elles sont formées par une seule pièce. De manière encore plus avantageuse, la paroi interne formée par la paroi de fond et par la paroi longitudinale 4 est une pièce monolithique. La tenue à la pression est donc améliorée.

De préférence, la paroi de fond 5 et la paroi longitudinale 4 définissent une surface sans arrêtes. L'interface entre la paroi longitudinale 4 et la paroi de fond 5 est donc continue.

La paroi de fond 5 est concave. La répartition des pressions sur cette face est donc rendue plus homogène. Les zones de concentration de contrainte sont donc évitées.

Le corps, à une extrémité proximale 7, présente une ouverture 8. Le support 2 est configuré pour coopérer avec le support 20 et configuré pour coopérer avec le corps 1 de manière à fermer ces ouvertures 8. Par exemple, cette ouverture 8 est définie par une section de la paroi longitudinale 4 du corps et forme ainsi un plan. Le support 20 est alors conformé pour venir au contact du corps afin de recouvrir cette ouverture 8. Plus précisément, cette ouverture 8 est recouverte par une face extérieure 24 du support 2.

De préférence, le corps 1 présente un flasque 9 prolongeant la paroi de section circulaire et s'étendant principalement dans un plan perpendiculaire à la direction longitudinale 17.

Ce flasque 9 est configuré pour accueillir des moyens de fixation du corps 1 au support 20. Ces moyens de fixation sont amovibles. Ils sont avantageusement des éléments clipables ou encliquetables. Alternativement, et comme représenté sur les figures, ces moyens de fixation comprennent des vis 22 prenant appui sur l'un parmi le corps 1 où le support 20 est fixées dans des filetages 23 correspondant pratiqués dans l'autre parmi le corps 1 ou le support 20.

De manière alternative, l'un parmi le corps 1 et le support 20 présente chacun un filetage complémentaire. La fixation du support par rapport au corps se fait alors en vissant directement le support sur le corps ou inversement. Avantageusement, dans cette solution il n'y pas d'élément de visserie rapporté.

Avantageusement, au moins un joint d'étanchéité 21, de préférence torique, est prévu à l'interface entre le corps et le support. Cela permet de compléter l'étanchéité de l'enceinte.

La chaudière 100 est conformée de manière à ce que les moyens de fixation du corps 1 sur le support 20 maintiennent une solidarisation de ces derniers alors qu'une pression, typiquement comprise entre 8 et 25 bars règne dans l'enceinte 101.

Comme cela parait sur les figures, la pression régnant dans l'enceinte s'exerce donc sur la paroi longitudinale 4, la paroi de fond 5 et sur la face intérieure 24 du support 20.

La paroi longitudinale 4 et la paroi de fond 5 forment une même pièce. L'enceinte est donc définie par une seule interface entre deux éléments : d'une part le corps 1 et d'autre part le support 20. L'invention permet ainsi de réduire considérablement les problématiques d'étanchéité et de tenue en pression.

En outre, l'enceinte 101 est délimitée par des parois qui favorisent une répartition homogène de la pression, limitant de ce fait les zones de concentration de contraintes et donc les risques de rupture sous l'effet de la pression. A cet effet, et comme indiqué précédemment, la paroi longitudinale 4 présente une section circulaire et la paroi de fond 5 est de préférence bombée.

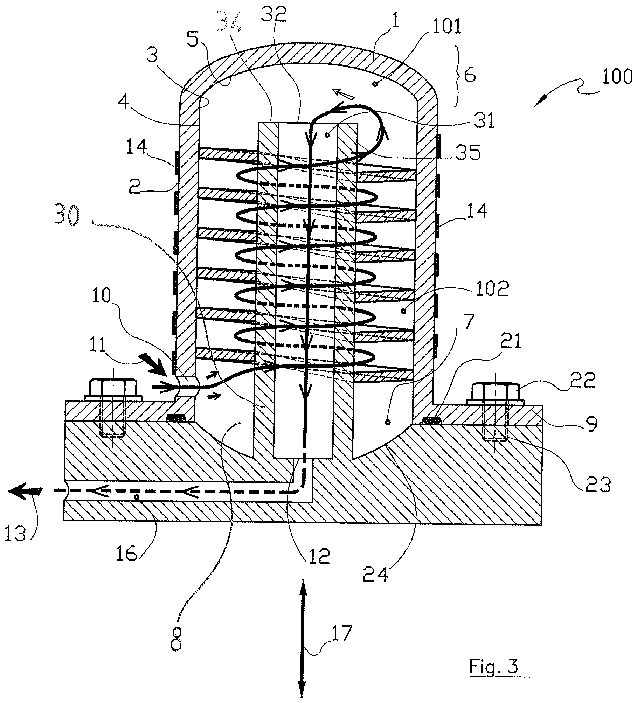

Selon le mode de réalisation illustré en figure 1, la face intérieure 24 du support 20 est plane. Selon un mode de réalisation privilégié illustré en figure 3, cette face intérieure 24 du support 20 est concave. Cela permet d'améliorer l'homogénéité de la répartition de la pression sur le support, éliminant ainsi les zones de concentration de contrainte. Ainsi, aucune des parois intérieures 3, 4, 24 de l'enceinte ne sont planes. Elles sont toutes concaves.

La tenue à la pression de la chaudière étant significativement améliorée, il n'y a nul besoin de recourir à des moyens complexes de reprise d'effort. La complexité, le coût des pièces et les difficultés de montage sont donc réduites. Par ailleurs, les formes circulaires et concaves de l'intérieur de l'enceinte 101, en permettant de mieux résister à la pression, autorisent une réduction de l'épaisseur des parois du corps 1. L'épaisseur étant réduite, la propagation de la chaleur depuis la résistance 14 vers le liquide est plus rapide. La préparation de la boisson est donc accélérée. En outre, en réduisant la masse et donc l'inertie du corps, l'invention permet de réduire la consommation d'énergie de la chaudière. En effet, le corps se comporte alors comme un diffuseur de chaleur, qui transfère immédiatement en liquide la chaleur qu'il reçoit. La température du corps au niveau des résistances est donc égale ou sensiblement égale à celle du liquide au contact de la paroi longitudinale 4. L'énergie calorique qui reste emmagasinée dans le corps 1 après la préparation de la boisson est donc considérablement réduite.

De manière avantageuse mais optionnelle, la chaudière 100 comporte également un capot de protection configuré pour recouvrir le corps 1 ou tout au moins la portion du corps 1 portant les résistances sérigraphiées 14. Ce capot assure une protection thermique et de préférence également électrique évitant une brulure par un utilisateur ou par un opérateur de maintenance et évitant également les détériorations des autres organes de la machine avoisinant la chaudière. Ce capot est de préférence en un matériau isolant électriquement et thermiquement. Il est par exemple en plastique. De préférence il recouvre toute la paroi interne c'est-à-dire toute l'enceinte 101. Il peut par exemple être fixé sur le corps 1 au niveau du flasque 9, de préférence en une zone du flasque éloigné de l'enceinte 101 pour éviter un transfert de chaleur depuis l'enceinte 101 vers le capot. Pour des raisons de clarté ce capot n'est pas illustré sur les figures.

La chaudière 100 comporte également au moins une entrée 10 et une sortie 12 pour faire respectivement entrer et sortir le liquide dans et hors de l'enceinte. Dans un mode de réalisation particulier, la chaudière 100 comporte également au moins un port d'entrée 11 et au moins un port de sortie 13 en communication respective.

Dans un mode de réalisation particulier, l'entrée 10 et/ou la sortie 12 de l'enceinte ne sont pas directement accessibles depuis l'extérieur de la chaudière 100. Tel est le cas sur l'exemple illustré aux figures 1 et 4. Dans ce cas, la chaudière présente alors un port d'entrée 11 en communication avec l'entrée 10. Cette communication est de préférence assurée par un conduit d'entrée 15. De même, la chaudière présente un port de sortie 13 en communication avec la sortie 12, cette communication étant assurée par un conduit de sortie 17.

Ces ports d'entrée et sortie 11 et 13 sont destinés à coopérer avec des organes hydrauliques de la machine. Le port d'entrée 11 est typiquement connecté à un conduit reliant la chaudière à une pompe. De manière alternative ou cumulée, typiquement le port de sortie 13 est connecté à un conduit reliant la chaudière à une chambre d'infusion d'un produit infusé.

Selon un mode de réalisation avantageux, illustré en figures 1 et 4, l'entrée 10 et la sortie 12 sont portés par le support 2. Les conduits 15 et 16 sont également portés par le support 2. Les ports 11 et 13 sont également portés par le support 2. Cette configuration particulièrement avantageuse permet de simplifier la fabrication de la chaudière et d'améliorer la fiabilité de l'étanchéité. En outre, l'assemblage est également simplifié. En effet, il suffit de connecter les ports d'entrée 11 et de sortie 13 aux autres organes de la chaudière et, préalablement ou ultérieurement, de fixer le corps avec le support 20 pour que l'ensemble de la chaudière puisse fonctionner.

De manière particulièrement avantageuse, le support 20 est réalisé en un matériau isolant thermiquement. Cela permet de diminuer l'inertie thermique de la chaudière. En outre, il est de préférence réalisé par moulage et par exemple par moulage par injection. Il est de préférence réalisé en plastique.

Selon des modes de réalisation alternatifs, l'entrée 10 et/ou la sortie 12 est portée par le corps 1. Le port correspondant 11 ou 13 peut alors être porté également par le corps 1. Dans l'exemple de la figure 3, l'entrée 10 de l'enceinte et le port d'entrée 11 sont portés par le corps 1.

De manière optionnelle mais particulièrement avantageuse, la chaudière comporte également un élément interne 30. L'élément interne 30 présente une face externe 25 tournée au regard de la paroi interne 3 du corps 1. L'espace défini entre la paroi interne 3 du corps 1 et l'élément interne 30 définit le volume de la chambre de chauffage. En effet, le liquide présent dans ce volume absorbe l'énergie thermique transmise depuis les résistances 14 jusqu'à la paroi interne 3. La chambre de chauffage 102 est ainsi contenue dans l'enceinte 101. L'élément interne 30 s'étend principalement dans la direction longitudinale 17. Il présente une première extrémité 33 au contact ou à proximité du support 20 et une deuxième extrémité 34 au contact ou à proximité de la paroi de fond 5.

Dans un mode de réalisation facultatif mais avantageux, l'élément interne 30 est creux. Il comporte ainsi un canal de circulation 31. A cet effet, il présente un orifice 32 à sa deuxième extrémité 34 ou à proximité de cette dernière. L'orifice 32 permet au liquide présent dans la chambre de chauffage de retourner dans le canal 31 ou d'en sortir, en fonction du sens de circulation. Ainsi l'orifice 32 est en communication fluidique avec l'un parmi l'entrée 10 ou la sortie 12. La première extrémité 33 de l'élément interne 30 est quant à elle en communication fluidique avec l'autre parmi l'entrée 10 ou la sortie 12.

Ainsi, si l'entrée 10 débouche dans la chambre de chauffage, alors la chaudière est agencée pour que le liquide passe successivement par : l'entrée 10, la chambre de chauffage 102, l'orifice 32, le canal 21, la première extrémité 33, la sortie 12. Naturellement ce flux s'effectuant en sens inverse si la sortie et l'entrée sont inversées. La première extrémité 33 du canal 31 débouche dans l'entrée 10 / la sortie 12 et communiquent ainsi avec le conduit d'entrée 15 / de sortie 16 et son port associé 11, 13.

Ainsi, dans la chambre de chauffage, c'est-à-dire dans le volume interne de l'enceinte 101 à l'exception du volume occupé par l'élément interne 30, le liquide se déplace dans un premier sens selon une projection sur la direction longitudinale 17 et se déplace dans le canal 31 dans un deuxième sens opposé au premier sens selon cette même projection longitudinale.

L'entrée 10 et la sortie 12 sont situées du même côté par rapport à un plan médian transversal à la direction longitudinale 17 et passant par le milieu de la paroi longitudinale 4. L'assemblage de la chaudière 100 en est facilité. Par ailleurs, le trajet du liquide est rallongé sans pour autant augmenter l'encombrement ou la complexité de la chaudière.

De façon préférée et avantageuse, l'élément interne 30 est fait d'un matériau bon conducteur de chaleur. Il fait ainsi office de diffuseur pour équilibrer la température du liquide présent à l'intérieur du canal de circulation 31 avec le liquide au contact de sa face externe 35, c'est-à-dire le liquide présent dans la chambre de chauffage 102.

De préférence il est en métal. Dans ce cas, et si le support 20 est en un autre matériau tel que le plastique, l'élément interne 30 est préalablement rapporté sur le support 20. Il peut être noté que la pression à l'intérieur du canal 31 et de la chambre de chauffage 102 est identique. Aucune force de pression n'a donc tendance à désolidariser l'élément interne 30 par rapport au support 20.

Selon un autre mode de réalisation l'élément interne est en un matériau à faible inertie thermique. Il est par exemple en plastique. Ainsi il absorbe peu de chaleur emmagasinée par le liquide.

Selon un premier mode de réalisation, illustré en figures 1 à 3, l'élément interne est solidaire du support 20. Avantageusement il forme avec ce dernier une pièce monolithique.

Selon un deuxième mode de réalisation, l'élément interne 30 est rapporté sur le support 20, par exemple par encliquetage ou par vissage. Il forme alors une liaison étanche avec le support 20 au niveau de la première extrémité 33.

Selon un troisième mode de réalisation, illustré en figure 4, l'élément interne 30 est porté par la paroi interne 3 du corps 1, par exemple par la paroi de fond 5. La première extrémité 33 vient alors en proximité et de préférence au contact de la face intérieure 24 du support 20, par exemple par l'intermédiaire d'un joint d'étanchéité.

De préférence, la chaudière comporte un guide 40 situé entre la paroi interne 3 et l'élément interne 30. Ce guide 40 est conformé pour guider le liquide entre le canal 31 et l'entrée 10 / la sortie 12 débouchant dans la chambre de chauffage. Typiquement, le guide forme une hélicoïde.

Avantageusement, le diamètre extérieur du guide permet de préférence un ajustement serré avec la paroi interne 3. Selon un mode de réalisation, le diamètre intérieur du guide 40 permet un ajustement coulissant avec la face externe de l'élément interne 30. L'insertion de l'élément interne 30 dans le corps 1 muni du guide 40 est ainsi facilitée. Les ajustements du guide 40 par rapport au corps 1 et l'élément interne 30 sont également prévus pour que le liquide évolue selon une hélicoïde lorsqu'il pénètre dans la chambre de chauffage.

De manière alternative, le diamètre intérieur du guide permet un ajustement serré avec la face externe de l'élément interne 30. Ainsi le liquide uniquement évolue selon une hélicoïde lorsqu'il pénètre dans la chambre de chauffage.

Selon un mode de réalisation, le guide est en métal. Selon un autre mode de réalisation, le guide est en un matériau à faible inertie thermique tel qu'un plastique.

Selon un mode préféré de réalisation, le guide 40 est distinct du support et du corps. Selon une autre option, le guide 40 forme avec le corps 1 une pièce monolithique. Dans ce cas, on pourra par exemple prévoir que le guide est formé par moulage sur la paroi interne 3 du corps 1.

Selon une autre option, le guide 40 forme avec le support 20 une pièce monolithique.

En prenant pour exemple non limitatif la chaudière 100 de la figure 1, le liquide suit le parcours suivant : entrée par le port d'entrée 12, conduit d'entrée 15 porté par le support 20, entrée 10 débouchant dans la chambre de chauffage 102, évolution hélicoïdale dans la chambre de chauffage 102 en étant guidé par le guide 40, orifice 32, canal de circulation 31, sortie 12 de la chambre de chauffage, conduit 16 de sortie porté par le support 20, port 13 de sortie.

Dans le mode de réalisation préféré où l'élément interne 30 est en métal ou tout autre matériau bon conducteur de chaleur, l'invention présente en outre comme avantage de mieux répartir la chaleur entre l'entrée et la sortie du liquide dans l'enceinte.

En effet, et comme illustré sur les figures 1 à 4, l'entrée 10 et la sortie 12 étant situées du même côté et l'élément interne 30 étant conducteur de chaleur, la chaudière 100 permet d'accélérer la chauffage du liquide froid entrant dans la chaudière par son contact avec l'élément interne 30 dont la paroi est chauffée par le liquide chaud s'écoulant dans son canal de circulation 31 vers la sortie 12. Le liquide froid est donc chauffé à la fois par la paroi longitudinale 3 et par la paroi externe 35 de l'élément interne 30. Le temps de chauffage et donc de préparation de boisson est donc diminué.

Selon un autre mode de réalisation, non illustré, l'entrée 10 et la sortie 12 sont inversées par rapport aux modes de réalisation illustrés en figure 1 à 4. Dans ce mode de réalisation, l'entée 10 débouche dans le canal de circulation 31 et la sortie 12 débouche dans la chambre de chauffage 102. Dans ce cas, l'invention a pour intérêt de préchauffer le liquide froid par son contact avec la paroi intérieure du canal de circulation 31 qui est chauffée par le liquide chaud s'écoulant contre la paroi externe 35 de l'élément chauffant 30. Le liquide est donc réchauffé avant de sortir du canal de circulation 31 et de parvenir dans la chambre de chauffage 102.

Ce sens de circulation du fluide sera naturellement inversé en inversant l'entrée et la sortie.

De la description qui précède, il apparaît clairement que la chaudière selon l'invention permet d'améliorer la tenue à la pression tout en permettant un assemblage facilité et tout en présentant une grande fiabilité.

L'invention n'est pas limitée aux modes de réalisation décrits à titre d'exemple et s'étend à tous les modes de réalisation couverts par les revendications.

### REFERENCES

| | | | |
|---|---|---|---|
| 1. | corps | 30. | élément interne |
| 2. | paroi externe | 31. | canal de circulation |
| 3. | paroi interne | 32. | orifice |
| 4. | paroi longitudinale | 33. | première extrémité |
| 5. | paroi de fond | 34. | deuxième extrémité |
| 6. | extrémité distale | 35. | face externe |
| 7. | extrémité proximale | | |
| 8. | ouverture du corps | 40. | guide |
| 9. | flasque | | |
| 10. | entrée | 100. | Chaudière |
| 11. | port d'entrée | 101. | enceinte |
| 12. | sortie | 102. | chambre de chauffage |
| 13. | port de sortie | | |
| 14. | résistance sérigraphiée | | |
| 15. | conduit d'entrée | | |
| 16. | conduit de sortie | | |
| 17. | direction longitudinale | | |
| 20. | support | | |
| 21. | joint d'étanchéité | | |
| 22. | vis | | |
| 23. | filetage | | |
| 24. | face intérieure du support | | |

## Revendications

1. Chaudière (100) pour machine de préparation de boisson destinée à chauffer un liquide porté sous une pression d'au moins 8 bars pour réaliser une infusion d'un produit par le liquide chauffé, la chaudière comprenant:
• un corps (1) présentant une paroi externe (2) recouverte d'une résistance sérigraphiée (14) et une paroi interne (3),
• la paroi interne (3) du corps (1) présentant une paroi longitudinale (4) s'étendant selon une direction longitudinale (17) et présentant une section circulaire,
• un élément interne (30) présentant une face externe (35) située au regard de la paroi longitudinale (4) du corps (1) pour définir avec la paroi longitudinale (4) une partie au moins d'une chambre de chauffage (102),
• une entrée (10) et une sortie (12) de liquide dans la chambre de chauffage (102),
• la paroi interne (3) du corps (1) présente également au moins une paroi de fond (5) située à une extrémité distale (6) de la paroi longitudinale (4),
• un support (20) configuré pour coopérer avec le corps (1) de manière à former avec la paroi longitudinale (4) et la paroi de fond (5) une enceinte étanche (101) comprenant la chambre de chauffage (102),
**caractérisé en ce que** la paroi de fond (5) est concave.

2. Chaudière (100) selon la revendication précédente dans laquelle la paroi longitudinale (4) présente une extrémité proximale opposée à l'extrémité distale et formant une ouverture (8), et dans laquelle le support (20) présente une face intérieure (24) et la coopération de la face intérieure (24) avec le corps ferme cette ouverture (8).

3. Chaudière (100) selon l'une quelconque des revendications précédentes dans laquelle la paroi de fond (5) présente avec la paroi longitudinale (4) une continuité de matière.

4. Chaudière (100) selon l'une quelconque des revendications précédentes dans laquelle l'élément interne (30) s'étend principalement selon la direction longitudinale (17).

5. Chaudière (100) selon l'une quelconque des revendications précédentes dans laquelle l'élément interne (30) est creux pour former intérieurement un canal de circulation (31).

6. Chaudière (100) selon la revendication précédente dans laquelle le support (20) comporte un conduit (16) reliant le canal de circulation (31) à un port (13) destiné à être connecté à un organe de la machine ou un tuyau.

7. Chaudière (100) selon l'une quelconque des revendications précédentes dans laquelle le corps (1) comporte une entrée (10) reliant la chambre de chauffage (102) à un port (11) destiné à être connecté à un organe de la machine ou un tuyau.

8. Chaudière (100) selon l'une quelconque des revendications précédentes dans laquelle la paroi longitudinale (4) et la paroi de fond (5) forment une même pièce.

9. Chaudière (100) selon l'une quelconque des revendications précédentes dans laquelle le support (20) comporte au moins une entrée (10) ou une sortie (12) débouchant dans l'enceinte (101).

10. Chaudière (100) selon la revendication précédente dans laquelle le support (20) comporte au moins :
- un port (11, 13) destiné à être connecté à un organe de la machine ou un tuyau, et
- un conduit (15, 16) reliant fluidiquement le port de communication avec l'intérieur de l'enceinte (101).

11. Chaudière (100) selon l'une quelconque des deux revendications précédentes prise en combinaison avec la revendication 6 dans laquelle le support (20) comporte au moins :
- une entrée (10), un port (11) d'entrée et un conduit (15) reliant le port d'entrée (11) à l'entrée (10);
- une sortie (12), un port (13) de sortie et un conduit (16) reliant le port de sortie (13) à la sortie (12) ;
et dans laquelle l'une parmi l'entrée (10) ou la sortie (12) débouche dans la chambre de chauffage (102) et l'autre parmi l'entrée (10) ou la sortie (12) débouche dans le canal de circulation (31).

12. Chaudière (100) selon l'une quelconque des revendications précédentes comprenant un guide (40) configuré pour définir avec une face externe (35) de l'élément interne (30) et la paroi longitudinale (4) un chemin de passage pour le liquide dans la chambre de chauffage (102).

13. Machine de préparation de boissons chaudes comportant une chaudière (100) selon l'une quelconque des revendications précédentes ainsi qu'une pompe configurée pour alimenter la chaudière avec un liquide sous pression.

14. Procédé d'assemblage d'une chaudière (100) selon l'une quelconque des revendications 1 à 12 comprenant : l'insertion de l'élément interne (30) dans le corps (1) en rapportant le support (20) sur le corps (1).

## Patentansprüche

1. Heizkessel (100) für Getränkezubereitungsmaschine, der dazu bestimmt ist, eine unter einen Druck von mindestens 8 bar gesetzte Flüssigkeit zu erhitzen, um durch die erhitzte Flüssigkeit ein Brühgetränk aus einem Produkt zu erzeugen, wobei der Heizkessel umfasst:
• einen Körper (1), der eine Außenwand (2), die mit einem siebgedruckten Widerstand (14) bedeckt ist, und eine Innenwand (3) aufweist,
• wobei die Innenwand (3) des Körpers (1) eine Längswand (4) aufweist, die sich in einer Längsrichtung (17) erstreckt, und einen kreisförmigen Querschnitt aufweist,
• ein inneres Element (30), das eine Außenseite (35) aufweist, die sich gegenüber der Längswand (4) des Körpers (1) befindet, um mit der Längswand (4) mindestens einen Teil einer Heizkammer (102) zu definieren,
• einen Flüssigkeitseingang (10) -ausgang (12) in der Heizkammer (102),
• die Innenwand (3) des Körpers (1) weist auch mindestens eine Bodenwand (5) auf, die sich an einem distalen Ende (6) der Längswand (4) befindet,
• einen Träger (20), der konfiguriert ist, um mit dem Körper (1) zusammenzuwirken, um mit der Längswand (4) und der Bodenwand (5) eine dichte Einschließung (101) zu bilden, welche die Heizkammer (102) umfasst,
**dadurch gekennzeichnet, dass** die Bodenwand (5) konkav ist.

2. Heizkessel (100) nach dem vorstehenden Anspruch, wobei die Längswand (4) ein proximales Ende entgegengesetzt zum distalen Ende, und eine Öffnung (8) bildend aufweist, und wobei der Träger (20) eine Innenseite (24) aufweist, und das Zusammenwirken der Innenseite (24) mit dem Körper diese Öffnung schließt.

3. Heizkessel (100) nach einem der vorstehenden Ansprüche, wobei die Bodenwand (5) mit der Längswand (4) stoffschlüssig ist.

4. Heizkessel (100) nach einem der vorstehenden Ansprüche, wobei sich das innere Element (30) hauptsächlich in der Längsrichtung (17) erstreckt.

5. Heizkessel (100) nach einem der vorstehenden Ansprüche, wobei das innere Element (30) hohl ist, um innerlich einen Zirkulationskanal (31) zu bilden.

6. Heizkessel (100) nach dem vorstehenden Anspruch, wobei der Träger (20) eine Leitung (16) beinhaltet, die den Zirkulationskanal (31) mit einem Anschluss (13) verbindet, der dazu bestimmt ist, mit einem Organ der Maschine oder einem Schlauch verbunden zu werden.

7. Heizkessel (100) nach einem der vorstehenden Ansprüche, wobei der Körper (1) einen Eingang (10) beinhaltet, der die Heizkammer (102) mit einem Anschluss (11) verbindet, der dazu bestimmt ist, mit einem Organ der Maschine oder einem Schlauch verbunden zu werden.

8. Heizkessel (100) nach einem der vorstehenden Ansprüche, wobei die Längswand (4) und die Bodenwand (5) ein gleiches Stück bilden.

9. Heizkessel (100) nach einem der vorstehenden Ansprüche, wobei der Träger (20) mindestens einen Eingang (10) oder einen Ausgang (12) beinhaltet, der in die Einschließung (101) mündet.

10. Heizkessel (100) nach dem vorstehenden Anspruch, wobei der Träger (20) mindestens beinhaltet:
- einen Anschluss (11, 13), der dazu bestimmt ist, mit einem Organ der Maschine oder einem Rohr verbunden zu werden, und
- eine Leitung (15, 16), die den Kommunikationsanschluss fluidisch mit dem Inneren der Einschließung (101) verbindet.

11. Heizkessel (100) nach einem der beiden vorstehenden Ansprüche, in Kombination mit Anspruch 6, wobei der Träger (20) mindestens beinhaltet:
- einen Eingang (10), einen Eingangsanschluss (11) und eine Leitung (15), die den Eingangsanschluss (11) mit dem Eingang (10) verbindet;
- einen Ausgang (12), einen Ausgangsanschluss (13) und eine Leitung (16), die den Ausgangsanschluss (13) mit dem Ausgang (12) verbindet;
und wobei der eine aus dem Eingang (10) oder dem Ausgang (12) in die Heizkammer (102) mündet, und der andere aus dem Eingang (10) oder dem Ausgang (12) in den Zirkulationskanal (31) mündet.

12. Heizkessel (100) nach einem der vorstehenden Ansprüche, der eine Führung (40) umfasst, die konfiguriert ist, um mit einer Außenseite (35) des inneren Elements (30) und der Längswand (4) einen Durchgangspfad für die Flüssigkeit in der Heizkammer (102) zu definieren.

13. Maschine zum Zubereiten von heißen Getränken, die einen Heizkessel (100) nach einem der vorstehenden Ansprüche, sowie eine Pumpe beinhaltet, die konfiguriert ist, um den Heizkessel mit einer unter Druck stehenden Flüssigkeit zu versorgen.

14. Verfahren zum Zusammensetzen eines Heizkessels (100) nach einem der Ansprüche 1 bis 12, umfassend: das Einführen des inneren Elements (30) in den Körper (1) durch Beibringen des Trägers (20) an den Körper (1).

## Claims

1. Boiler (100) for a beverage preparation machine intended to heat a liquid raised to a pressure of at least 8 bar to produce an infusion of a product by the heated liquid, the boiler comprising:
• a body (1) having an external wall (2) covered by a screen-printed resistor (14) and an internal wall (3),
• the internal wall (3) of the body (1) having a longitudinal wall (4) extending in a longitudinal direction (17) and having a circular cross-section,
• an internal element (30) having an external face (35) located facing the longitudinal wall (4) of the body (1) to define with the longitudinal wall (4) at least part of a heating chamber (102),
• a liquid inlet (10) and outlet (12) in the heating chamber (102),
• the internal wall (3) of the body (1) also has at least a bottom wall (5) located at a distal end (6) of the longitudinal wall (4),
• a support (20) configured to cooperate with the body (1) so as to form, with the longitudinal wall (4) and the bottom wall (5), a sealed enclosure (101) comprising the heating chamber (102),
**characterised in that** the bottom wall (5) is concave.

2. Boiler (100) according to the preceding claim, wherein the longitudinal wall (4) has a proximal end opposite to the distal end and forming an opening (8), and wherein the support (20) has an interior face (24) and the cooperation of the interior face (24) with the body closes this opening (8).

3. Boiler (100) according to either one of the preceding claims, wherein the bottom wall (5) has a continuity of material with the longitudinal wall (4).

4. Boiler (100) according to any one of the preceding claims, wherein the internal element (30) extends mainly in the longitudinal direction (17).

5. Boiler (100) according to any one of the preceding claims, wherein the internal element (30) is hollow to form internally a circulation channel (31).

6. Boiler (100) according to the preceding claim, wherein the support (20) includes a pipe (16) connecting the circulation channel (31) to a port (13) intended to be connected to a member of the machine or a tube.

7. Boiler (100) according to any one of the preceding claims, wherein the body (1) includes an inlet (10) connecting the heating chamber (102) to a port (11) intended to be connected to a member of the machine or a tube.

8. Boiler (100) according to any one of the preceding claims, wherein the longitudinal wall (4) and the bottom wall (5) form one and the same piece.

9. Boiler (100) according to any one of the preceding claims, wherein the support (20) includes at least one inlet (10) or an outlet (12) emerging in the enclosure (101).

10. Boiler (100) according to the preceding claim, wherein the support (20) includes at least:
- a port (11, 13) intended to be connected to a member of the machine or a tube, and
- a pipe (15, 16) fluidically connecting the communication port with the inside of the enclosure (101).

11. Boiler (100) according to either one of the preceding two claims taken in combination with claim 6, wherein the support (20) includes at least:
- an inlet (10), an inlet port (11) and a pipe (15) connecting the inlet port (11) to the inlet (10);
- an outlet (12), an outlet port (13) and a pipe (16) connecting the outlet port (13) to the outlet (12);
and wherein one from the inlet (10) or the outlet (12) emerges in the heating chamber (102) and the other from the inlet (10) or the outlet (12) emerges in the circulation channel (31).

12. Boiler (100) according to any one of the preceding claims, comprising a guide (40) configured to define, with an external face (35) of the internal element (30) and the longitudinal wall (4), a passage path for the liquid in the heating chamber (102).

13. Machine for preparing hot beverages including a boiler (100) according to any one of the preceding claims as well as a pump configured to supply the boiler with a pressurised liquid.

14. Method for assembling a boiler (100) according to any one of claims 1 to 12 comprising: the insertion of the internal element (30) in the body (1) while attaching the support (20) to the body (1).
